# EUROPEAN PATENT SPECIFICATION

(11) **EP 1 797 154 B1**
(45) Date of publication and mention of the grant of the patent: **17.10.2012**
(21) Application number: 05724903.9
(22) Date of filing: 08.03.2005
(51) Int. Cl.: C09K 3/22, C09K 3/18

(54) **PRODUCT FOR DUST CONTROL AND FREEZE CONTROL**
STAUBSCHUTZ- UND GEFRIERSCHUTZMITTEL
PRODUIT DE REGULATION DES POUSSIERES ET DE REGULATION DU GEL

(30) Priority: 30.09.2004 US 955401
(43) Date of publication of application: 20.06.2007
(73) Proprietor: Nalco Company, Naperville, IL 60563-1198 (US)
(72) Inventor: TRAN, Bo, L., Chicago, IL 60614 (US); BHATTACHARJA, Sanka, Niles, IL 60714 (US)
(74) Representative: Chalk, Anthony John
(86) International application number: PCT/US2005/007462
(87) International publication number: WO 2006/041515

(56) References cited:
- WO-A-95/20637
- WO-A-2004/039910
- US-A- 2 436 146
- US-A- 4 388 203
- US-A- 4 439 337
- US-A- 5 079 036
- US-A- 5 674 428
- US-A1- 2005 008 720
- US-B2- 6 890 451
- DATABASE BIOSIS [Online] BIOSCIENCES INFORMATION SERVICE, PHILADELPHIA, PA, US; 1976, SHEPARD M L ET AL: "THE WATER SODIUM CHLORIDE GLYCEROL PHASE DIAGRAM AND ITS APPLICATION IN CRYOBIOLOGY" XP002500280 Database accession no. PREV197662017231 & CRYOBIOLOGY, vol. 13, no. 1, 1976, pages 9-23, ISSN: 0011-2240

## Description

### FIELD OF THE INVENTION

This present invention relates to a product found to be useful for dust control and freeze control. This product may be applied on surfaces containing particles or particulate matter.

### BACKGROUND OF THE INVENTION

Dust from traffic on dirt roads and from the handling of bulk products with attendant particulate materials can create significant health, environmental and safety problems. In mining facilities, industrial sites and construction sites, the operations may be significantly restricted by dust cloud formation. Also, health, environmental and safety problems may arise when any kind of dust is inhaled.

Known dust controlling agents include oils, paper making byproducts such as ligno-sulfonate dispersions, and water, optionally containing various salts such as magnesium and calcium chloride, or sodium chloride. Also, as described in U.S. Patent 6,589,442, a partially saponified mixture of crude tall oil and vegetable oil, emulsified in water, may be used as a dust control agent.

However, further problems arise in dust control when the temperature drops well below freezing. During cold winters, the dust problems can persist even in subfreezing temperatures, particularly in operations such as coal mining. Also, even without dust problems, freshly mined coal may carry a significant amount of moisture, which can freeze. The freezing of the moisture on the surface of the coal and in the coal causes the chunks of coal to agglomerate into large, unwieldy lumps. Also, in cold weather, this moisture may cause lumps of coal to freeze to the metal walls of hopper cars and railroad cars that are used to transport the coal, which causes problems of materials handling. The same can apply to other divided materials, and, dust can be generated from the handling of such coal, as well as from the handling of other particulate products such as sand, at any temperature.

US-A-4439337 discloses the coating of a surface which is to be contacted with another surface, e.g. a particulate material, in the presence of moisture which is subject to freezing, with a composition containing water and substantially water soluble components comprising (1) a polyhydroxy compound or monoalkyl ether thereof, (2) an organic nonvolatile compound having at least one hydrophilic group, (2) being different than (1), optionally a salt which functions to lower the freezing point of water, and an organic polymer which functions to increase the viscosity and tackiness of the composition sufficient to retain the composition on non-horizontal surfaces to freeze proof the same.

US-A-4388203 relates to the thawing of frozen water by applying to the surface thereof a composition containing water and substantially water soluble components comprising (1) a polyhydroxy compound or monoalkyl ether thereof, (2) an organic nonvolatile compound having at least one hydrophilic group, (2) being different than (1), (3) an inorganic salt which functions to lower the freezing point of water, wherein only one of (2) or (3) need be present but both may be present, (4) an organic polymer which functions to increase the viscosity and tackiness of the composition sufficiently to permit a uniform layer of the composition to be placed on the frozen surface and (5) water.

WO-A-2004/039910 is concerned with deicing/anti-icing fluids which comprise a biobased freezing point depressant and water and further components selected from, for example: (a) a surfactant and an antioxidant; (b) a vinylpyrrolidone polymer having a molecular weight between about 10,000 and about 700,000; (c) a nonionic surfactant selected from the polyoxyalkylene ethers and an antioxidant; (d) a surfactant and a food grade material that functions as an antioxidant; or (e) a material that functions as both a buffer and a freezing point depressant.

US-A-2436146 describes a composition comprising a hygroscopic, non-deliquescent, normally solid, organic colloid capable of forming a gel with water, a water-soluble, deliquescent crystallisable salt capable of substantially lowering the freezing point of water, and a water-soluble substance which forms a film between the salt and the particles of the colloid and which acts as a protective agent for the colloid to protect it from decomposition or degradation. The composition is used for rendering coal dust-proof, or for soil stabilisation.

WO-A-95/20637 discloses processes and hydrocarbon oil and/or aqueous and/or fuel and/or additives compositions capable of performing at least one of: (a) stabilizing asphaltenes flocculated and/or precipitated in a petroleum product; (b) reducing fouling in petroleum apparatuses; (c) achieving yield increase in petroleum refining and/or petrochemical operations; (d) reducing particulate and/or SOₓ and/or NOₓ emissions during combustion of fuels; (e) reducing fouling and/or coke formation in catalysts; (f) favouring cleaning and/or decoking of petroleum apparatuses; and (g) reducing fouling arising from diesel and biodiesel fuels.

It would be desirable to identify an economical and highly-effective agent that provides freeze control to prevent agglomeration and bonding of moist, particulate materials even at very low temperatures on the order of about -20°C and below, while also providing dust control at any temperature.

### SUMMARY OF THE INVENTION

The instant claimed invention provides a method of preventing the generation of dust from particulate material and/or the agglomeration of particulate material and the adhesion thereof to surfaces in subfreezing temperatures, comprising:
(a) providing a concentrated product comprising a mixture of from 45 to 90 weight percent of glycerin, from 5 to 50 weight percent of water, and from 2 to 15 weight percent of a water soluble salt;
(b) diluting the concentrated product with 10 to 400 weight percent of water, based on the amount of said concentrated product to form a diluted aqueous product; and
(c) applying to the particulate material an amount of the diluted aqueous product to suppress the generation of dust and/or the agglomeration of the particulate material and its adhesion to surfaces.

The freezing point of said product is typically no more than about -20°C, for example about -35°C.

The product is applied in an amount sufficient to wet the surface of the particulate material and to substantially prevent freezing thereof at the temperature of use, to suppress agglomeration of the particulate material and its adhesion to surfaces, such as the metal surfaces of railroad cars, hopper cars, and conveyor belts.

### DESCRIPTION OF THE INVENTION

By this invention, a new, inexpensive, environmentally safe, long lasting dust control and freeze control method is provided, which can be used at essentially any temperature, but is particularly advantageous over other agents at subfreezing temperatures, for control of dust from dirt roads, as well as from piles of particulate materials, while being capable of preventing freeze agglomeration and freeze adhesion of wet, particulate materials.

The invention provides a method of preventing the generation of dust from particulate material and/or the agglomeration of particulate material and the adhesion thereof to surfaces in subfreezing temperatures, comprising:
(a) providing a concentrated product comprising a mixture of from 45 to 90 weight percent of glycerin, from 5 to 50 weight percent of water, and from 2 to 15 weight percent of a water soluble salt;
(b) diluting the concentrated product with 10 to 400 weight percent of water, based on the amount of said concentrated product to form a diluted aqueous product; and
(c) applying to the particulate material an amount of the diluted aqueous product to suppress the generation of dust and/or the agglomeration of the particulate material and its adhesion to surfaces.

Glycerin is a commercial product available from chemical supply companies.

Any source of water, including tap water and raw water, may be used to supply the water required for the concentrated product.

Concerning the requirement that there be included a water soluble salt, it has been found that, if desired, calcium chloride may also be added along with, or as a substitute for, the sodium or potassium chloride. Other inorganic and organic salts may also be used. These inorganic and organic salts are known to people of ordinary skill in the art of formulation chemistry.

This product may also contain trace amounts of other ingredients such as, but not limited to, free fatty acids and esters thereof and alcohols, such as methanol. It is believed that these trace amounts of other ingredients do not significantly detract from the dust control properties of the product. It is also believed that these trace amounts of other ingredients do not significantly detract from the freeze protection characteristics of the product. Therefore, these trace materials are tolerable in the product, but typically all of them together make up no more than about 5 weight percent of the product.

As stated, the instant claimed invention uses a product for dust control and freeze control, which comprises a mixture of about 45 to about 90 weight percent of glycerin; about 5 to about 50 weight percent of water; and about 2 to about 15 weight percent of a water soluble salt. A preferred composition of this product is from about 50 to about 90 weight percent glycerin, from about 5 to about 45 weight percent water and from about 3 to about 10 weight percent water soluble salt. Some samples of the product comprise from about 60 to about 90 weight percent glycerin, from about 5 to about 38 weight percent water and from about 4 to about 10 weight percent water soluble salt.

The method may use a crude glycerin solution which comprises glycerin, water and a water soluble salt, wherein said crude glycerin solution is derived from vegetable oils or is formed as a byproduct from a biodiesel manufacturing process of forming fatty acid esters from vegetable oils.

Crude glycerin may be derived from vegetable oils, either during manufacturing of fatty acids or by using recycled vegetable oils as a source material. One such derivation is the formation of crude glycerin from a manufacturing process for making fatty acid esters from at least one oil selected from the group consisting of soybean oil and canola oil. Another derivation uses recycled vegetable oils from fast food restaurants as a source material for the crude glycerin. Other methods of deriving crude glycerin from animal and vegetable oils are known to people of ordinary skill in the art of glycerin. It is preferred to use crude glycerin derived from vegetable oils and that are obtained from oil seeds.

Crude glycerin may also be formed as a byproduct from a biodiesel manufacturing process for forming fatty acid esters from vegetable oils, preferably ethyl and methyl esters of particularly soybean oil and canola oil. However, other oils may be used. Biodiesel production processes are well known. There are three basic routes to biodiesel production from fat-containing oils from living things, particularly oilseeds, namely (1) base catalyzed transesterification of the oil; (2) direct acid catalyzed transesterification of the oil; (3) conversion of the oil to its fatty acids, and then to biodiesel.

Most of the biodiesel produced today is conventionally done with the base catalyzed reaction, because of its high conversion of fatty acids directly to the ester form with minimal side reactions and reaction time. For examle 45.45 kg, (100 pounds) of vegetable oil comprising fatty acid triglycerides may be reacted with an appropriate amount of ethyl or methyl alcohol, for example 4.54 kg (10 pounds,) to yield about 10 pounds of glycerin and about 45.45 kg (100 pounds) of biodiesel quality fatty acid methyl or ethyl ester. Of course, variation in the proportions and types of ingredients may be used.

The base used for the reaction is typically sodium hydroxide or potassium hydroxide, being dispersed in the alcohol used (typically ethanol or methanol), with standard agitation or mixing. The alcohol/base mix may then be charged into a closed reaction vessel, and the vegetable oil is added. The system is then closed, and typically held at about 71°C (160°F) for a period of about 1 to 8 hours, although some systems recommend that the reaction take place at room temperature. An excess of alcohol is normally used to insure almost total fat/oil conversion to ester form.

Once the reaction is complete, two major products have been formed: crude glycerin and biodiesel fatty acid esters. Excess alcohol may be recovered by distillation or another conventional manner, and the crude glycerin can generally be drawn off the bottom of a settling vessel. The crude glycerin is on the alkaline side because of the presence of the sodium or potassium hydroxide. It is preferably neutralized with an acid such as hydrochloric acid, thus forming an inorganic salt in the glycerin.

The crude glycerin byproduct is quite inexpensive, much cheaper than the pure glycerin that can be refined from it, so the material used is an economical dust control and freeze control agent, which remains useable at very low temperatures, and is highly effective for settling dust.

The product comprising crude glycerin derived from vegetable oils or from biodiesel processes typically comprises from about 78 to 84 weight percent glycerin, from about 7 to about 16 weight percent water and from about 6 to about 9 weight percent inorganic salts. The crude glycerin also may contain trace amounts of materials without a detrimental effect upon its efficacy as either a dust control agent or as a freeze conditioning agent. These trace amounts of materials typically are from about 0.5 to about 3 weight percent ethanol or methanol, fatty acids, and esters thereof.

The instant claimed invention provides a method of preventing the agglomeration of particulate material and the adhesion thereof to surfaces such as those of metal cars, bins, and conveyor belts, in subfreezing temperatures. The method comprises, *inter alia,* applying to said particulate material and/or directly to the metal surfaces an effective amount of a product, which product comprises a mixture of glycerin, water and a water soluble salt.

The instant claimed invention relates to a method of preventing the agglomeration of particulate materials, such as coal, iron ore, bauxite, wood chips and the like. Coal is considered a "particulate", even though the majority of the coal may be found in rather large chunks. Metal surfaces are particularly vulnerable to such adhesion by lumps of wet coal or other particulate minerals under very cold conditions, because of the high heat transfer properties of metal, and because coal and certain other particulate minerals are stored in metal bins and transported in metal rolling hoppers, railroad cars and conveyor belts.

An advantage of this invention arises from the use of an aqueous glycerin mixture, which is known to have a depressed freezing point, plus the presence of a water soluble salt such as sodium chloride, which provides unexpectedly great additional freezing point depression when compared with pure glycerin and water, so that the product, even when diluted with additional water, is easily used at subfreezing temperatures. For example, the freezing point of the material may be typically no more than -20°C, for example about -35°C.

For example, it is known that a 50% water solution of pure glycerin begins to freeze at a temperature at least about -25°C (-13°F) with freezing definitely taking place at a temperature of at least about -29°C (-20°F). In contrast, the product which is applied by the method of the instant claimed invention, comprising about 50% weight percent glycerin and containing sodium chloride, has been found to not begin freezing until the temperature reaches at least about -35°C (about -31°F), with freezing definitely taking place at a temperature of at least about -40°C (about -40°F).

This freezing point can be further lowered by increasing the amount of water soluble salt, such as sodium chloride, to a level of about 10 weight percent or more in the product.

Thus, the product may also be used even under harsh winter conditions as an anti-agglomerating and anti-adhesion agent, without encountering problems that result from freezing of the product. The product may be applied to the particulate material, or it may be directly applied to metal surfaces to prevent particulate adhesion by freezing, or it may be directly applied to surfaces such as conveyor belts (or airplane wings and cooling towers) to prevent ice build up even when particulate matter is not present.

The product is available from Nalco Company, 1601 W. Diehl Road, Naperville, IL 60563, (630) 305-1423.

The product may optionally be diluted with water to reduce the cost per square meter of surface being treated. The amount of water dilution may vary with the conditions, and may be determined at the site of use, depending upon the nature of the particulate matter, be it dirt roads, coal piles, sand piles, or the like, and the temperature at the area. The typical dilution is from about 10 to about 400 or 500 weight percent of water, based on the amount of the product present. This diluted mixture may then be applied to a road, a pile of coal, such as coal in a railroad car or rolling hopper, a pile of sand, or the like, to reduce the propagation of dust. This product also will act to prevent particle agglomeration at low temperatures.

It is typically preferred for the product to contain, as applied, from about 40 to about 60 weight percent of glycerin when its use is for freeze control, that is: prevention of agglomeration of material particles, including chunks, and prevention of their adhesion to particularly metal surfaces of railcars, conveyor belts and the like, even if the prevention of dust in the air is not a major factor.

An "effective amount" is that amount of product sufficient to wet the surface of the particulate material and/or the other surfaces so as to substantially prevent freezing thereof at the temperature of use, and to suppress agglomeration of the particulate material and its adhesion to surfaces.

As previously stated, the product is particularly useful at subfreezing temperatures, because it does not freeze until preferably at least about -35°C, or a lower temperature is reached. The product serves as a freeze control agent to prevent the agglomeration of particulate matter like coal, and the sticking thereof to particularly metal surfaces such as railroad cars or conveyor belts, by prevention of freezing of water present.

The instant claimed invention also envisages a method of preventing the generation of dust from particulate materials, which comprises applying to said particulate material a product for dust control, which product comprises an effective mixture of glycerin, water, and a water soluble salt, in concentrations and in an amount sufficient to wet the surface of the particulate material and to substantially prevent the generation of dust from said particulate material.

The method of preventing the generation of dust from particulate materials comprises applying to said particulate material a product for dust control, wherein said product comprises a mixture of from about 45 to about 90 weight percent of glycerin, from about 5 to about 50 weight percent of water and from about 2 to about 15 weight percent of a water soluble salt.

It has been found that the product use according to the method of this invention is highly effective for dust control, showing improvements in its own right over many other dust control agents at any temperature, to suppress the generation of dust in the surrounding air.

When dust suppression is a major factor, it is generally preferred for the product to contain, as applied, in the order of from about 20 to 80 weight percent of glycerin.

The following examples, and the above disclosure, are presented to describe preferred embodiments and utilities of the invention, and are not meant to limit the invention, which is as stated in the claims appended hereto.

### EXAMPLES

### Example 1 - Dust Control

A crude, aqueous glycerin solution is obtained as a product from a biodiesel synthesis process using soybean oil or canola oil as a raw material, with methanol and sodium hydroxide as added reactants, under conventional, commercial conditions. The resulting, crude glycerin component is separated in a conventional manner, and neutralized with hydrochloric acid. In this embodiment, the resulting, crude glycerin solution comprises about 80 weight percent of glycerin, about 10 to about 11 weight percent of water, about 7 weight percent of sodium chloride, and about 1 to about 2 weight percent of fatty acids and methyl esters thereof.

This product is applied to a dirt road located in a sand and gravel processing facility, to act as a dust control material. The first application is applied as a mixture of about 70 weight percent of the above product and about 30 weight percent of added water. Four weeks later, a "maintenance dose", of a mixture of about 20 weight percent product and about 80 weight percent water, is applied to maintain the desired level of dust control. The level of dust control achieved is considered acceptable, and the customer places a large order for the product for use as a dust control agent on this dirt road.

The product may be diluted with water to any degree that still provides the desired effect.

### Example 2 - Freeze Control

The operators of a power plant wish to not receive coal that is frozen together in agglomerated clumps, that are difficult to unload, and must be broken up prior to being used as fuel for the power plant boilers.

The coal travels in open rail cars from the coal processing plant to the power plant, and during winter months under subfreezing temperatures it has been known for coal to arrive within a week to two weeks in a wet, frozen state, causing handling to be very difficult.

During the month of December, 2003, the , crude glycerin solution of Example 1 was diluted with water, and applied to coal being loaded in open rail cars, using a spray nozzle that applies the crude glycerin solution as the coal comes off the conveyor belt and lands in the rail car. The solution, as applied, comprised from about 60 to about 65 weight percent of the crude glycerin solution, and from about 35 to about 40 weight percent of added water. A dosing level of from about two to about four pints of material as applied is used per ton of coal.

The power plant immediately notices a lessening in their receipt of frozen-together, or "agglomerated", coal, and requests that throughout the winter months this material be applied on a regular basis.

Similarly-treated coal does not adhere significantly to a metal conveyor belt as it is transported in subfreezing conditions. The conveyor belt may also be directly sprayed with the solution of Example 1, to suppress ice build-up.

## Claims

1. A method of preventing the generation of dust from particulate material and/or the agglomeration of particulate material and the adhesion thereof to surfaces in subfreezing temperatures, comprising:
(a) providing a concentrated product comprising a mixture of from 45 to 90 weight percent of glycerin, from 5 to 50 weight percent of water, and from 2 to 15 weight percent of a water soluble salt;
(b) diluting the concentrated product with 10 to 400 weight percent of water, based on the amount of said concentrated product to form a diluted aqueous product; and
(c) applying to the particulate material an amount of the diluted aqueous product to suppress the generation of dust and/or the agglomeration of the particulate material and its adhesion to surfaces.

2. The method of claim 1 in which said particulate material, carrying said product, is placed in a rail or hopper car in subfreezing conditions, whereby the particulate material does not agglomerate or adhere to the car.

3. The method of claim 1 in which said particulate material, carrying said product, is placed on a conveyor belt in subfreezing conditions, whereby the particulate material does not agglomerate or adhere to the conveyor belt.

4. The method of claim 1 in which said particulate material is coal.

5. The method of claim 1 wherein the salt comprises sodium chloride.

6. The method of claim 1 wherein the product contains from 0.5 to 3 weight percent of fatty acids and esters thereof.

## Patentansprüche

1. Verfahren zur Verhinderung der Erzeugung von Staub aus Partikelmaterial und/oder der Agglomeration von Partikelmaterial und dessen Haftung an Oberflächen bei Temperaturen unter dem Gefrierpunkt, umfassend:
(a) Bereitstellung eines konzentrierten Produkts, das eine Mischung aus 45 bis 90 Gew.% Glycerin, 5 bis 50 Gew.% Wasser und 2 bis 15 Gew.% wasserlöslichem Salz umfasst;
(b) Verdünnen des konzentrierten Produkts mit 10 bis 400 Gew.% Wasser, bezogen auf die Menge des konzentrierten Produkts, um ein verdünntes wässriges Produkt zu bilden; und
(c) Aufbringen einer Menge des verdünnten wässrigen Produkts auf das Partikelmaterial, um die Erzeugung von Staub und/oder die Agglomeration des Partikelmaterials und dessen Haftung an Oberflächen zu unterdrücken.

2. Verfahren nach Anspruch 1, bei dem das Partikelmaterial, welches das Produkt trägt, bei Temperaturen unter dem Gefrierpunkt in einem Eisenbahnwagen oder Aufgabewagen platziert wird, wodurch das Partikelmaterial nicht agglomeriert oder an dem Wagen haftet.

3. Verfahren nach Anspruch 1, bei dem das Partikelmaterial, welches das Produkt trägt, bei Temperaturen unter dem Gefrierpunkt auf einem Förderband platziert wird, wodurch das Partikelmaterial nicht agglomeriert oder an dem Förderband haftet.

4. Verfahren nach Anspruch 1, bei dem das Partikelmaterial Kohle ist.

5. Verfahren nach Anspruch 1, bei dem das Salz Natriumchlorid umfasst.

6. Verfahren nach Anspruch 1, bei dem das Produkt 0,5 bis 3 Gew.% Fettsäuren und deren Ester enthält.

## Revendications

1. Procédé pour empêcher la production de poussière à partir d'une matière particulaire ou l'agglomération d'une matière particulaire et l'adhérence de celle-ci à des surfaces à des températures sous le point de congélation, qui comprend :
(a) la fourniture d'un produit concentré qui comprend un mélange de 45 à 90 % en masse de glycérine, de 5 à 50 % en masse d'eau et de 2 à 15 % en masse d'un sel hydrosoluble ;
(b) la dilution du produit concentré avec 10 à 400 % en masse d'eau, basé sur la quantité dudit produit concentré pour former un produit aqueux dilué ; et
(c) l'application à la matière particulaire d'une quantité du produit aqueux dilué pour supprimer la production de poussière ou l'agglomération de la matière particulaire et son adhérence aux surfaces.

2. Procédé selon la revendication 1, dans lequel ladite matière particulaire, portant ledit produit, est placée dans un wagon porte-rails ou un wagon-trémie dans des conditions sous le point de congélation, par lequel la matière particulaire ne s'agglomère pas ni n'adhère au wagon.

3. Procédé selon la revendication 1, dans lequel ladite matière particulaire, portant ledit produit, est placée sur une bande de convoyeur dans des conditions sous le point de congélation, par lequel la matière particulaire ne s'agglomère pas ni n'adhère à la bande de convoyeur.

4. Procédé selon la revendication 1, dans lequel ladite matière particulaire est du charbon.

5. Procédé selon la revendication 1, dans lequel le sel comprend du chlorure de sodium.

6. Procédé selon la revendication 1, dans lequel le produit contient de 0,5 à 3 % en masse d'acides gras et d'esters de ceux-ci.
